# EUROPEAN PATENT SPECIFICATION

(11) **EP 2 858 479 B1**
(45) Date of publication and mention of the grant of the patent: **08.04.2020**
(21) Application number: 13728951.8
(22) Date of filing: 11.06.2013
(51) Int. Cl.: A01G 25/09, B05B 3/18

(54) **A LIQUID DISTRIBUTING SYSTEM AND A METHOD FOR DISTRIBUTING LIQUID ON A FIELD**
EIN FLÜSSIGKEITSVERTEILUNGSSYSTEM UND EIN VERFAHREN ZUM VERTEILEN VON FLÜSSIGKEIT AUF EINEM FELD
SYSTÈME DE DISTRIBUTION DE LIQUIDE ET PROCÉDÉ DE DISTRIBUTION DE LIQUIDE SUR UN TERRAIN

(30) Priority: 11.06.2012 DK 201270315
(43) Date of publication of application: 15.04.2015
(73) Proprietor: Mima Invent ApS, 8000 Aarhus C (DK)
(72) Inventor: ANDERSEN, Lars Skovlund, 8320 Mårslet (DK)
(74) Representative: Patentgruppen A/S
(86) International application number: PCT/DK2013/050188
(87) International publication number: WO 2013/185774

(56) References cited:
- WO-A1-2008/004864
- DE-A1- 10 311 957
- US-A- 2 931 579
- US-A- 4 877 189
- US-A1- 2006 011 753
- US-A1- 2011 089 269

## Description

### Field of the invention

The invention relates to a liquid distributing system for distributing liquids such as water or slurry on a field according to the preamble of claim 1 and a method for distributing liquid on a field.

### Background of the invention

For distributing slurry on a field it is known to use a tractor pulled slurry spreader that is filled with slurry from a slurry tank at a farm and then transported to and distributed on the field. Although this technique is very flexible it requires much manpower and the heavy slurry filled spreader and tractor has to drive in the field hereby increasing the risk of damaging the crops and/or the soil.
Within the technical field of irrigation it is known to use hose reel machines where the irrigation device is moved across the field by reeling the hose onto a stationary coil or where the hose is coiled while a self-driven hose reel machine and irrigation device moves across the field. From US 3,608,825 it is also known to use an irrigation system comprising a water distributor. The water distributor distributes the water by means of a very wide boom that is driven by a tractor. The water if feed to the water distributor by means of a water supply pipe comprising a number of valves wherein the water distributor opens and closes these valves as they are passed by the water distributor.

Also, from US 2006/0011753 A1 it is known to provide a linear water feed apparatus for use in agricultural irrigation including a linear-move machine with a mobile truss assembly which supports a plurality of sprinklers.

And from WO 2008/004864 A1 a method for distributing manure on a field wherein a vehicle carries a manure distribution unit and travels across the field while laying out manure supply hoses from a hose buffer device.

However, such a water filled coil of water hose or hose buffer device is heavy if it has to have a reasonable capacity and range hereby increasing the risk of damaging the crops and/or the soil or the hose itself especially on stony fields. And even though these systems may be relatively efficient in a longitudinal direction it takes substantial time and manpower to reposition the distribution systems every time the irrigation device has to be moved in a transverse direction on the field.

An object of the invention is therefore to provide for an advantageous technique for distributing liquids on a field.

### The invention

The invention provides for a liquid distributing system for distributing liquids such as water or slurry on a field. The system comprises a liquid conduit for being placed in a longitudinal direction on the field and pressurising means for pressurising a liquid in the liquid conduit. The system further comprises distributing means comprising drive means for moving the distributing means in the longitudinal direction, wherein the distributing means comprises tap means for tapping liquid from the liquid conduit and delivery means for distributing the liquid to the field. The distribution means further comprises conduit displacement means for displacing the liquid conduit in a direction transverse to the longitudinal direction on the field.

The liquid distributing system is characterised in that the liquid conduit comprises valves and the tap means comprises valve control means for controlling the valves. By making the distributing means tap the liquid from the liquid conduit "on the fly" entails that, distributing means with a large hose reel or a tank - from which the liquid can be distributed on the field - can be avoided and the total weight of the distributing means can thereby be reduced, thus reducing the risk of damaging the crops and/or the soil during distribution of the liquid. However, it is time consuming to move the liquid conduit sideway every time the distributing means has made a run across the field and it is therefore advantageous to make the distributing means comprises conduit displacing means, so that the liquid conduit may be moved transversely to a position from where it is possible to tap it during the next run.

Furthermore, providing the tap means with valve control means for controlling the valves on the liquid conduit is advantageous in that it hereby is possible to open and close the valves at advantageous positions when the valves pass through the tap means.

It should be noted that by the term "pressurising means" is to be understood any kind of pump, elevated tank, hydrophore or any other type of pressurising arrangement suitable for pressurising a liquid in a liquid conduit.

In an aspect of the invention, said conduit displacing means comprises means for displacing said liquid conduit in accordance with said motion of said distributing means in said longitudinal direction.

By displacing the liquid conduit in accordance with the motion of the distributing means along the liquid conduit is advantageous in that it hereby is possible to drive the displacement of the liquid conduit by means of the drive means for moving the distributing means and hereby simplify the distributing means design and avoid separate drive means for driving the transverse displacement of the liquid conduit.

In an aspect of the invention, said tap means comprises a tap housing substantially surrounding said tap means, wherein said tap housing comprises a liquid guide for leading said liquid to said delivery means.

Enclosing the tap means in a tap housing is advantageous in that it enables that splashes of liquid does not leave the tap means and it enables a more simplified tap means design in that the tapping does not have to be made in a very precise position or in a specific direction.

In an aspect of the invention, said tap housing primarily is formed by a flexible tarpaulin or tarpaulin-like material.

Forming the tap housing from flexible tarpaulin or tarpaulin-like material is advantageous in that it allows the tap housing to be folded e.g. during road transport of the distributing means. Furthermore, the flexible quality of this material makes it easier to clean the tap housing and it prevents unwanted material build-up in that e.g. hardened slurry will break off the tarpaulin or tarpaulin-like material as soon as a certain size has been reached.

In an aspect of the invention, said delivery means comprises a distributing pump mounted on said distributing means.

Providing the delivery means with a dedicated distributing pump is advantageous in that the capacity of the delivery means is thereby made independent from the supply of liquid from the liquid conduit - as long as consumed amount does not exceed the amount supplied from the liquid conduit. Furthermore, a dedicated distributing pump enables a more controlled delivery of the liquid to the field.

In an aspect of the invention, said delivery means comprises a plurality of drag hoses for delivering said liquid at or on the soil.

Providing the distributing means with a plurality of drag hoses to substantially form a dribble bar is advantageous in that it allows for a more controlled delivery of the liquid to the field and it ensures that the liquid can be delivered directly on the soil hereby reducing problems regarding evaporation and obnoxious smell.

In an aspect of the invention, said liquid distributing system further comprises a liquid conduit trolley for managing said liquid conduit and wherein said liquid conduit trolley is coupled to one end of said liquid conduit.

The distributing means will move the liquid conduit transversely as it moves along the liquid conduit but to manage the means supplying the liquid conduit - such as a supply hose in the headland of the field -, to adjust the length of liquid conduit in accordance with the length of the field in the longitudinal direction of the liquid conduit and/or to assist the distributing means in managing the liquid conduit during turning of the distributing means it is advantage to make the liquid distributing system comprise a liquid conduit trolley.

In an aspect of the invention, said tap means comprises a flow blocking device for substantially emptying said liquid conduit as it passes said tap means.

It is advantageous that the liquid conduit is substantially emptied by a flow blocking device when it passes the tap means, in that it makes it easier to manage the liquid conduit when it has passed the tap means and it increases the capacity of the system.

In an aspect of the invention, said liquid conduit is a flexible hose according to any of the flexible hose mentioned in the following.

Hereby is achieved an advantageous embodiment of the invention.

In an aspect of the invention, said liquid distributing system comprises a flow blocking device according to any of the flow blocking devices mentioned in the following.

Hereby is achieved an advantageous embodiment of the invention.

In an aspect of the invention, said conduit displacing means comprises conduit pickup means including means for picking said liquid conduit up of said field and leading it to said tap means.

Providing the conduit displacing means with conduit pickup means arranged for lifting the liquid conduit of the ground and guiding it to the tap means is advantageous in that this process hereby can take place in a more controlled manner thus reducing the risk of malfunction or faults occurring and increasing the life of the equipment.

In an aspect of the invention, said conduit displacing means comprises conduit replacing means including means for leading said liquid conduit from said tap means and back down onto said field.

Providing the conduit displacing means with conduit displacing means arranged for guiding the liquid conduit from the tap means and placing it back on the ground is advantageous in that this process hereby can take place in a more controlled manner thus reducing the risk of malfunction or faults occurring and increasing the life of the equipment.

In an aspect of the invention, said conduit pickup means is arranged separate from said conduit replacing means.

Arranging the conduit pickup means separate from the conduit replacing means is advantageous in that it hereby is possible to design the two to their specific task and thereby optimize their function.

In an aspect of the invention, said conduit pickup means and said conduit replacing means are arranged on opposite sides of said tap means.

By placing the conduit pickup means and the conduit replacing means on opposite sides of the tap means it is possible to pick up the conduit, tap it and put it back down on the field in a continuous process as the distributing means travels across the field. This is advantageous in that the distributing means then only have to carry a very little part of the liquid conduit - and its contents - at a time, thus reducing the weight of the distributing means considerably and thus increasing its use range and manoeuvrability of the distributing means. Furthermore, arranging the conduit pickup means and the conduit replacing means in this way is advantageous in that it allows the conduit to be tapped for a relatively long time while being guided through the distributing means and thus being displaced to a new location on the field.

The invention further provides for a method for distributing liquid on a field by means of a liquid distribution system according to any of the previously described liquid distribution systems. The method comprises the steps of:
- placing a liquid conduit comprising valves on the field,
- pressurising a liquid in the liquid conduit,
- moving distributing means along the liquid conduit while at least periodically tapping the liquid from the liquid conduit by controlling the valves by means of valve control means of the distribution means and distributing it to the field, and
- displacing the liquid conduit in a direction transverse to the liquid conduit by means of conduit displacing means of the distributing means.

Displacing the liquid conduit by means of conduit displacing means, as the distributing means moves along the liquid conduit, is advantageous in that the liquid conduit hereby is left in position to be tapped when the distributing means does the next run across the field.

In an aspect of the invention, said liquid conduit is transversely displaced while said distributing means is moving along said liquid conduit.

Hereby is achieved an advantageous embodiment of the invention.

In an aspect of the invention, said liquid conduit is pressurised by means of stationary pressurising means.

No matter if the pressurising means are in the form of a pump, an elevated tank or other it would add considerable weight to the distributing means if it had to be mobile with the distributing means and it is therefore advantageous that the pressurising means are stationary.

In an aspect of the invention, said liquid conduit is picked up from said field, tapped and replaced on said field in a continuous sequential process.

It is advantageous to pick up the conduit, tap it and put it back down on the field in a continuous process as the distributing means travels across the field in that the distributing means thereby only have to carry a very little part of the liquid conduit - and its contents - at a time, hereby reducing the weight of the distributing means considerably and thus increasing its use range and manoeuvrability.

The invention also provides for use of a liquid distributing system according to any of the previously mentioned liquid distributing systems for distributing slurry to a field.

Using a system according to the present invention for distributing slurry on a field is advantageous in that it will reduce the use of manpower to distribute the slurry and it reduces the risk of damaging the crops or soil during the slurry distribution.

### Figures

The invention will be described in the following with reference to the figures in which
- fig. 1: illustrates a liquid distributing system, as seen from the back,
- fig. 2: illustrates a liquid distributing system, as seen from the top,
- fig. 3: illustrates a liquid distributing system, as seen from in perspective from the bottom,
- fig. 4: illustrates a liquid distributing system distributing slurry on a field, as seen from the top,
- fig. 5: illustrates a liquid conduit trolley, as seen from the top,
- fig. 6: illustrates liquid distributing means that have just reached one end of the field, as seen from the top,
- fig. 7: illustrates liquid distributing means at the start of a turning procedure, as seen from the top,
- fig. 8: illustrates liquid distributing means around the middle of a turning procedure, as seen from the top,
- fig. 9: illustrates liquid distributing means after a turning procedure, as seen from the top,
- fig. 10: illustrates a valve, as seen in perspective,
- fig. 11: illustrates a valve, as seen from the end,
- fig. 12: illustrates a cross section through the middle of a valve in a closed state, as seen from the side,
- fig. 13: illustrates a cross section through the middle of a valve approaching an open state, as seen from the side,
- fig. 14: illustrates a cross section through the middle of a valve locked in an open state, as seen from the side,
- fig. 15: illustrates a cross section through the middle of a valve in an open state while the locking means is being released, as seen from the side,
- fig. 16: illustrates a cross section through the middle of a valve in an open state after the locking means has been released, as seen from the side,
- fig. 17: illustrates a cross section through the middle of a valve approaching a closed state, as seen from the side,
- fig. 18: illustrates a fluid distribution system comprising a flexible hose with a valve approaching a flow blocking device, as seen from the side,
- fig. 19: illustrates a valve passing a first flow blocker, as seen from the side,
- fig. 20: illustrates a valve passing valve control means, as seen from the side,
- fig. 21: illustrates a valve passing a second flow blocker, as seen from the side, and
- fig. 22: illustrates cross section of a valve engaging valve control means, as seen from the side.

### Detailed description

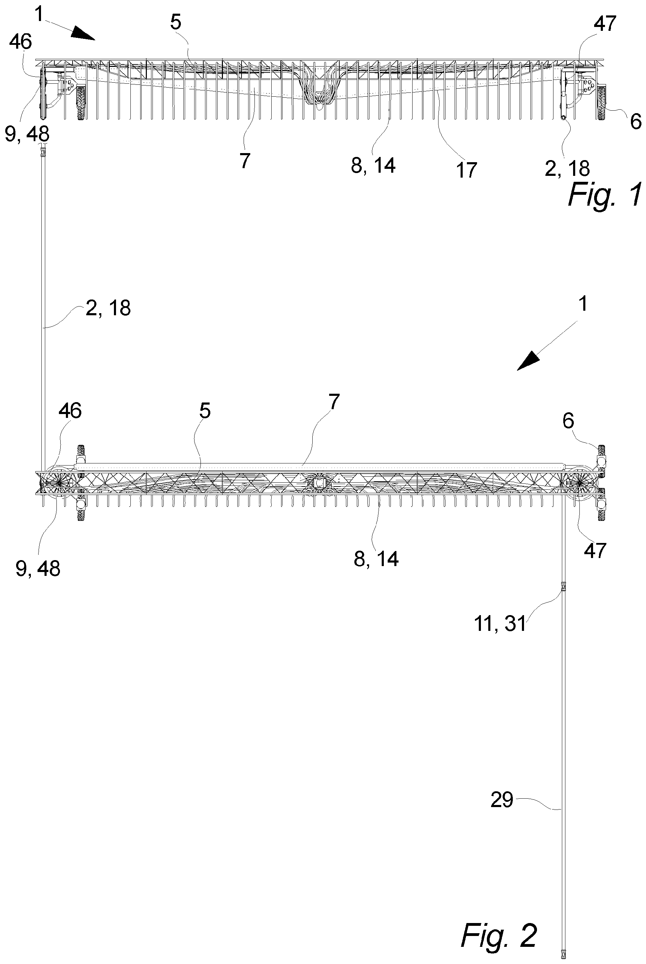

Fig. 1 illustrates a liquid distributing system 1, as seen from the back.

In this embodiment of the invention the liquid distributing means 1 comprises a liquid conduit 2 (shown more clearly in fig. 2) which, by means of conduit displacing means 9 is passing through tap means 7 of the distributing means 5 that lead the tapped liquid to delivery means 8.

In this embodiment the distributing means 5 is formed as a very wide boom enabling that the distributing means 5 can distribute liquid on or between many rows of crops simultaneously such as up to or even more than forty eight rows.

In this embodiment of the invention the distributing means 5 comprises delivery means 8 in the form of drag hoses 14 forming the delivery means 8 as a dribble bar. The illustrated system 1 delivers the liquid on or at least very close to the surface of the soil but in another embodiment the delivery means 8 could be formed as sprayers, sprinklers or even soil incorporators designed to incorporate the liquid e.g. in a stubble field or plough-land by means of harrow teeth arranged at each injector. In another embodiment the delivery means 8 could also be formed as disc cutter injectors suited for injecting the liquid in grass and fields with growing crops.

The distributing means 5 runs across the field on wheels provided at either ends of the distributing means 5. In this embodiment each wheel comprises drive means 6 in the form of electrical motors but in another embodiment the drive means 6 could be formed as a centrally arranged combustion engine driving one or more wheels or instead of interacting with the underlying ground the drive means 6 could interact with the liquid conduit 2 by pulling the liquid conduit 2 to pull the distributing means 5 forward.

In this embodiment of the invention the liquid distributing system 1 and particularly the liquid conduit 2 and the distributing means 5 are configured for distributing slurry on the field for fertilizing purposes. However, in another embodiment of the invention the distributed liquid could be water for irrigation purposes, pesticides, sludge or any other kind of liquid or semi-liquid. Thus, the term "liquid distributing system" does not exclude the presence of solids such as straw, sawdust or similar materials or gases such as methane gas, ammonium fumes or similar.

In this embodiment the conduit displacing means 9 of the distributing means 5 comprises conduit pickup means 46 arranged for lifting the liquid conduit 2 of the ground and leading it into the tap means 7 and the conduit displacing means 9 comprises conduit replacing means 47 arranged for replacing the liquid conduit 2 on the ground again after it has left the tap means 7. In this embodiment the conduit pickup means 46 and the conduit replacing means 47 are formed by a series of guide wheels 48, which will rotate while guiding the liquid conduit 2 upwards and into the tap means 7, out again on the other side and down onto the ground. These guide wheels 48 are free wheeling to substantially avoid friction between the conduit pickup/replacing means 46, 47 and the liquid conduit 2 while guiding the liquid conduit 2 from the longitudinal direction in which it lays on the field 3 and upwards and into a transversal direction without bending the pressurised liquid conduit 2 too much. However, in another embodiment one or more of the guide wheels 48 in the conduit pickup means 46 and/or the conduit replacing means 47 could be driven.

Also, in another embodiment the conduit pickup means 46 and/or the conduit replacing means 47 could also or instead comprise linear guide means, sliding guide means e.g. comprising guiding rails, gutters or the like against which the liquid conduit 2 will slide while being guided through the conduit pickup means 46 or the conduit pickup means 46 and/or the conduit replacing means 47 could be designed differently e.g. in dependence of the specific use, the specific crops, the specific liquid conduit 2 and/or other.

In this embodiment the conduit pick up means 46 and the conduit replacing means 47 are formed substantially identically to enable easy manufacturing and assembly but most of all to ensure simple and uncomplicated change in the direction of travel of the distributing means 5. I.e. in this embodiment the conduit pickup means 46 will act as conduit replacing means 47 as soon as the distributing means 5 changes direction of travel and vice versa.

But, in another embodiment the design of the conduit pickup means 46 could vary more from the design of the conduit replacing means 47 either permanently or it could require manual and/or automatic mechanical adjustment to alter the function of the conduit pickup means 46 to be conduit replacing means 47 and vice versa.

In this embodiment the conduit pickup means 46 and the conduit replacing means 47 are placed at opposite ends of the distributing means 5 but in another embodiment one or both could be placed differently on the distributing means 5.
Fig. 2 illustrates liquid distributing system 1, as seen from the top.

In this embodiment of the invention the distributing means 5 is completely self-controlling and can therefore function unmanned. However, in another embodiment the distributing means 5 could require an operator to control the operation of the distributing means 5 and the distributing means 5 could in such case be provided with a seat or an operator cabin. In another embodiment the distributing means 5 would be self-controlled when it crosses the field but it would require the control of an operator during start-up, shut-down and/or during negotiating turns and/or obstacles.

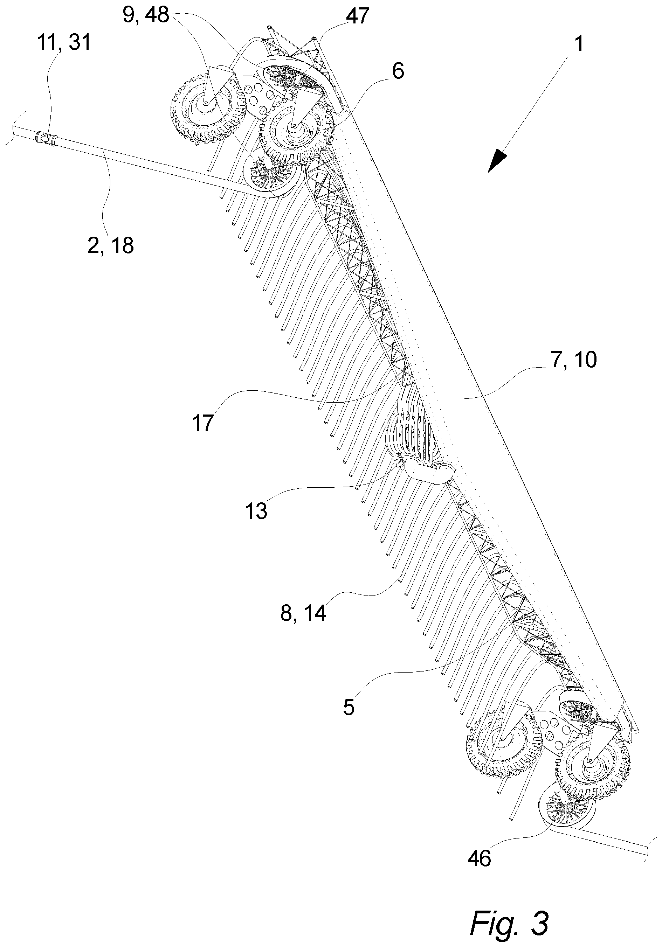

Fig. 3 illustrates a liquid distributing system, as seen from in perspective from the bottom.

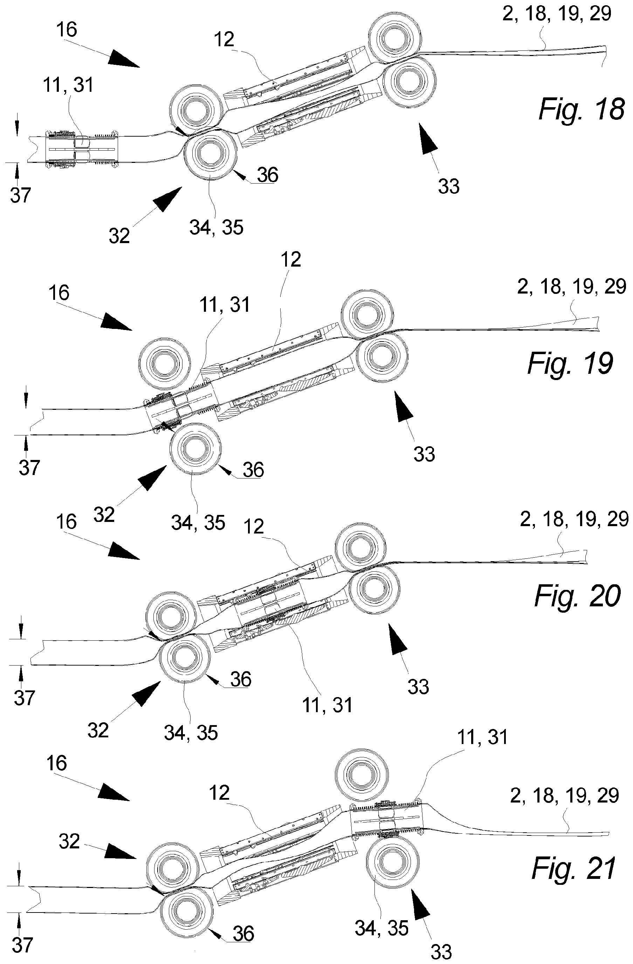

The tap means 7 will be discussed more in relation with figs. 18-22 but in fig. 3 the tap means 7 is shown comprising a tap housing 10 stretching almost the entire width of the distributing means 5.

In this embodiment of the invention the tap housing 10 is formed by a flexible tarpaulin material to allow the distributing means 5 and the tap housing 10 to be folded during road transport and/or to reduce the risk of hardened material build-up on the surfaces of the housing 10. However, in another embodiment the tap housing 10 could be formed in a more rigid material such as steel, plastic or fibre reinforced plastic.

In this embodiment of the invention the tap housing 10 is formed with a bottom surface sloping downwards towards a centrally arranged exit hole hereby forming a liquid guide 17 for leading the tapped liquid to the delivery means 8.

In this embodiment the delivery means 8 of the distributing means 5 comprises a central distributing pump 13 for pumping the liquid out through all the drag hoses 14. However, in another embodiment the tap means 7 or the delivery means 8 could comprise individual chambers which could be filled as the valves 11 of the liquid conduit 2 pass, where after the liquid could be delivered to the field by means of individual distributing pumps or simply by means of gravitational pull.

In a preferred embodiment of the invention the tap means 7 comprises one or two flow blocking devices 16 as disclosed in figs. 18-21 and valve control means as disclosed in figs. 18-22.

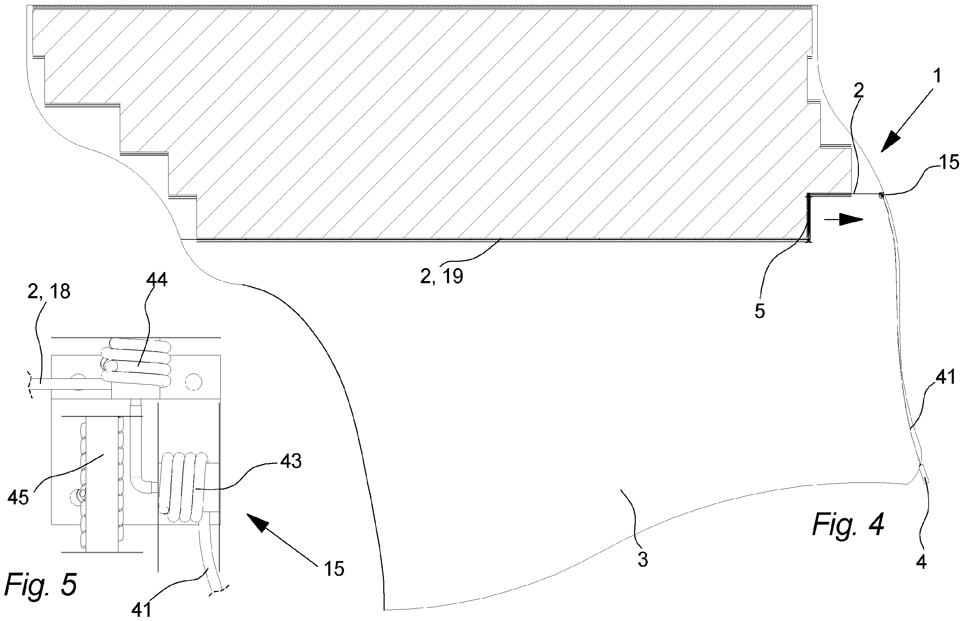

Fig. 4 illustrates a liquid distributing system 1 distributing slurry on a field 3, as seen from the top, wherein the hatched area illustrates the areas of the field 13 on which the distributing means 5 has distributed liquid so far.

In this embodiment stationary pressurizing means 4 are placed at the edge of the field 3 and a supply hose 41 is rolled out in the headland of the field 3 to connect the pressurizing means 4 with a mobile liquid conduit trolley 15 which in turn supplies liquid to the distributing means 5 by means of the liquid conduit 2.

However, in another embodiment of the invention the pressurizing means 4 could be mobile and e.g. be connected directly to the liquid conduit 2, hereby avoiding the use of a liquid conduit trolley 15.

The distributing means 5 is traveling across the field 3 in the longitudinal direction of the liquid conduit 2 and since the distributing means 5 comprises conduit displacing means 9 the liquid conduit 2 is displaced in a direction transverse to the longitudinal direction in accordance with the motion of the distributing means 5 in the longitudinal direction. Thus, as the distributing means 5 taps liquid from the liquid conduit 2 it also displaces the liquid conduit 2 transversely so that it is in position to be picked up by the distributing means 5 and tapped when the distributing means 5 does the next run across the field displaced but parallel to the previous run.

In another embodiment of the invention the liquid conduit 2 could be pressurised from both sides i.e. from both ends of the conduits 2, 19 e.g. to compensate for pressure drop if the field 3 was very long or to double the capacity. In such a case the pressurizing means 4 would be provided at both ends of the field and both headlands could comprise a liquid conduit trolley 15.

Fig. 5 illustrates a liquid conduit trolley 15, as seen from the top.

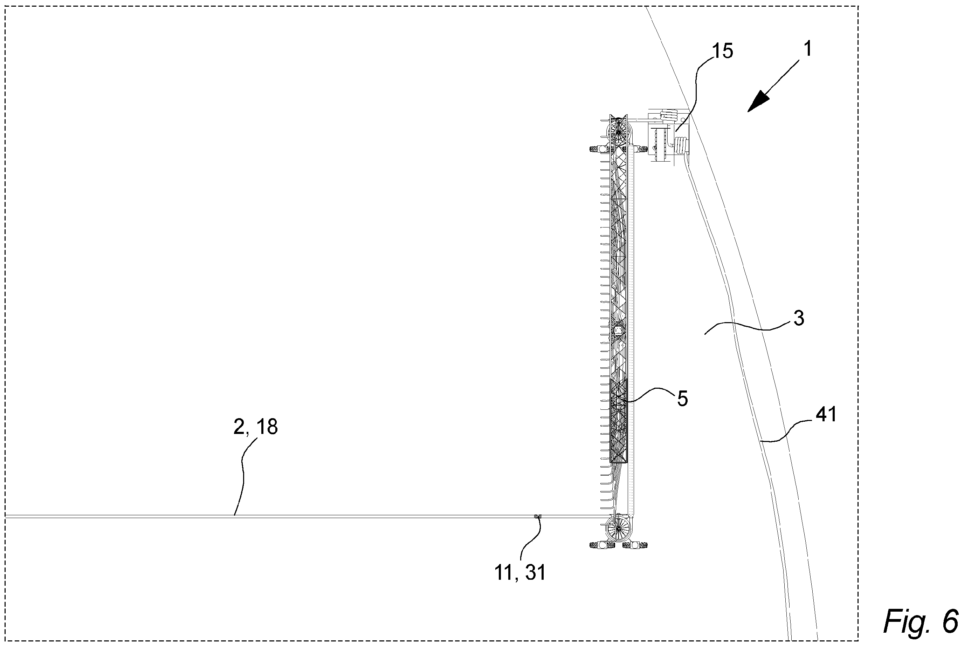

The liquid conduit trolley 15 can e.g. help the distributing means 5 in negotiating turns and it can in this embodiment reel up the supply hose 41 on a supply hose coil 43 - as the distributing means 5 moves transversely (down towards the pressurizing means 4) - and buffering the liquid conduit 2 - as shown in figs. 6-9 - e.g. to compensate for any irregular (non-orthogonal) shape of the field 3 using the liquid conduit coil 44.

To reduce the weight of the liquid conduit trolley 15, as little supply hose 41 and liquid conduit 2 are in use as possible, in that the liquid-filled excess hose 41 and conduit 2 will have to be rolled up on the dedicated coils 43, 44. Empty unused hose 41 and conduit 2 is in this embodiment therefore rolled up on separate spare coils 45 to be used if the necessary.

The following figures 6-9 illustrates a liquid distributing system 1 wherein the distributing means 5 are negotiating a turn by the help of the liquid conduit trolley 15.

In the present embodiment the distributing means 5 and the liquid conduit trolley 15 are self-controlled and the turning process is made without the aid of a human operator e.g. on the basis of input from sensors, cameras, GPS units or other. However in another embodiment the liquid distributing system 1 could require permanent human control or an operator could be summoned as the distributing means 5 approaches a turn (or at least the turn at the end of the field 3 where the pressurizing means 4 and/or the liquid conduit trolley 15 is located) to control the turning process manually or semi-automatically.

Fig. 6 illustrates a liquid distributing system 1 that have just reached one end of the field 3, as seen from the top.

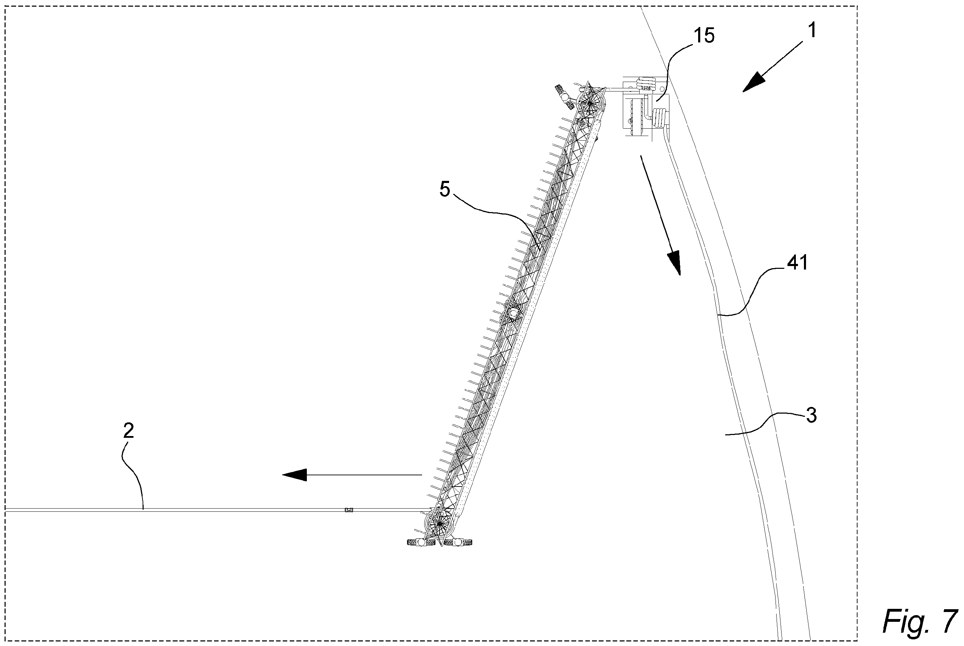

Fig. 7 illustrates a liquid distributing system 1 at the start of a turning procedure, as seen from the top.

The turning process can obviously be performed in many ways, but in this embodiment of the invention the end of the distributing means 5 closest to the liquid conduit trolley 15 will stay at a substantially constant distance from the liquid conduit trolley 15 as the liquid conduit trolley 15 travels along the edge of the field 3 while the other end of the distributing means 5 moves away from the edge of the field 3 to allow the other end and the liquid conduit trolley 15 to pass it.

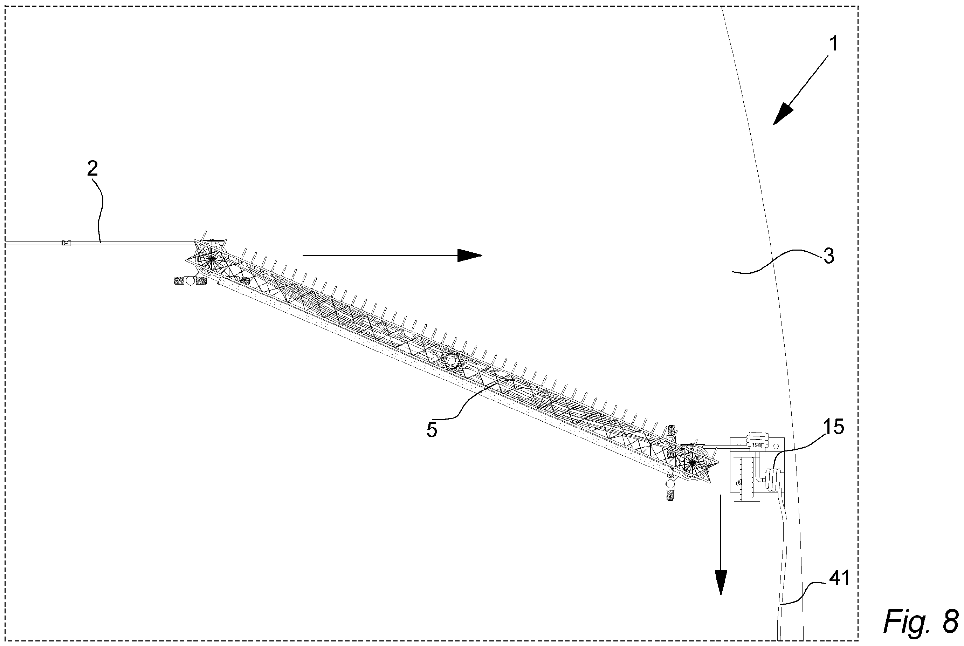

Fig. 8 illustrates a liquid distributing system 1 around the middle of a turning procedure, as seen from the top.

As soon as the liquid conduit trolley 15 has passed the distributing means 5, the distributing means 5 starts moving towards the edge of the field 3 again.

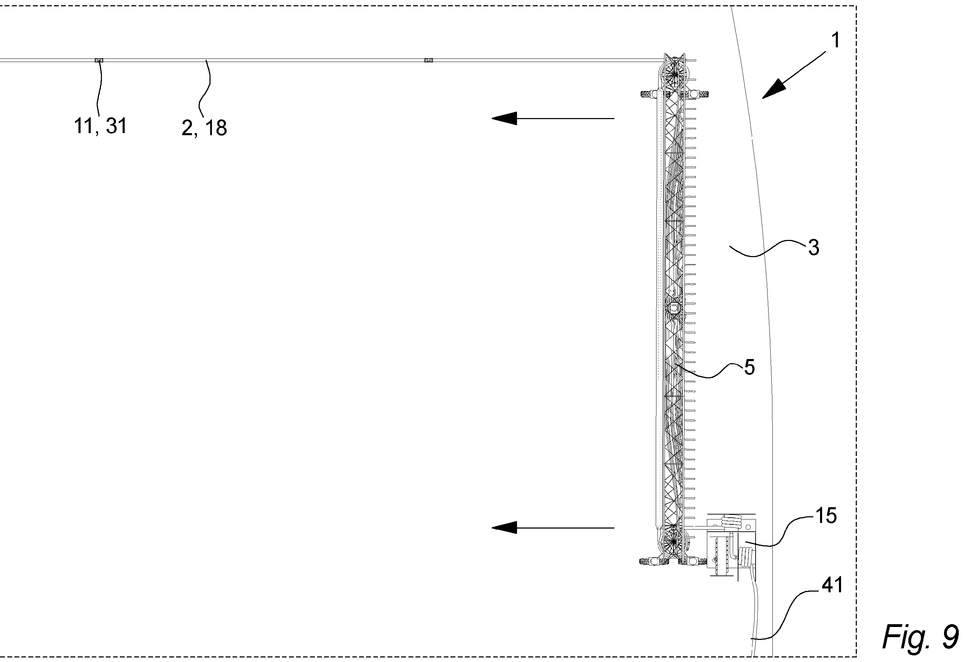

Fig. 9 illustrates a liquid distributing system 1 after a turning procedure, as seen from the top.

When the edge of the field 3 has been reached, the distributing means 5 can start a new run across the field 3.

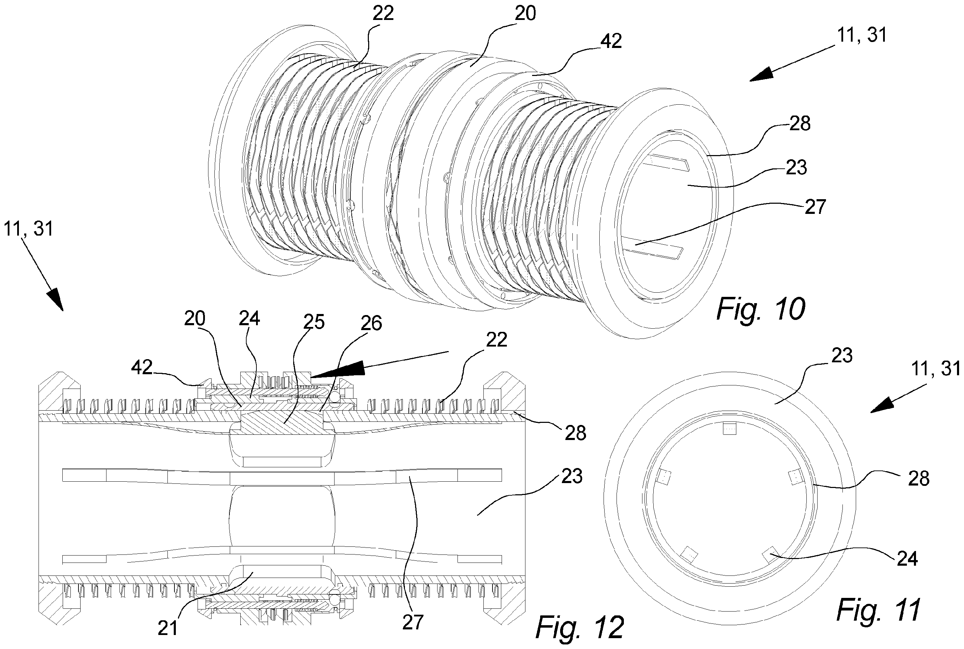

Fig. 10 illustrates a valve 11, as seen in perspective.

In this embodiment the valve 11 comprises a cylindrical valve housing 23 with a slidable tap-aperture cover 20 arranged on the outside of the valve housing 23. However in another embodiment the tap-aperture cover 20 could be arranged on the inside of the valve housing 23.

In this embodiment of the invention the valve housing 23 and most of the parts of the valve 11 is made from metal such as aluminium, an aluminium alloy, steel, stainless steel or another metal. However, in another embodiment of the invention the valve housing 23 and most of the other valve parts may be made from hard rigid plastic or another natural or synthetic material.

Fig. 11 illustrates a valve 11, as seen from the end.

In this embodiment of the invention the tap-aperture cover 20 is covering the tap-apertures 21 and the position fixation means 25 are therefore disengaged and forced at least partly into the cavity inside the valve 11.

Fig. 12 illustrates a cross section through the middle of a valve 11 in a closed state, as seen from the side.

In this embodiment of the invention the valve 11 comprises a number of tap-apertures 21 distributed evenly around the centre of the valve housing 23. The fluid flowing through the inside of the valve 11 can hereby be tapped through the tap-apertures 21 when the valve 11 is in an open state.

The tap-apertures 21 are covered by a tap-aperture cover 20 in the form of a ring that can slide along the outside surface of the valve housing 23. In this embodiment of the invention the tap-aperture cover 20 can selectively slide in both axial directions of the valve 11, so that the valve 11 can be changed from the present closed state to an open state no matter which axial direction the tap-aperture cover 20 is pushed in. To ensure that the valve 11 remains in a closed state when not affected by external forces, the valve 11 is also provided with spring means 22 arranged on either sides of the tap-aperture cover 20.

However, in another embodiment of the invention the tap-aperture cover 20 would only be able to be pushed in one axial direction and the valve 11 would therefore only comprise one spring means 22.

In the present illustration the tap-aperture cover 20 has just been pushed as indicated by the arrow to start an opening process of the valve 11.

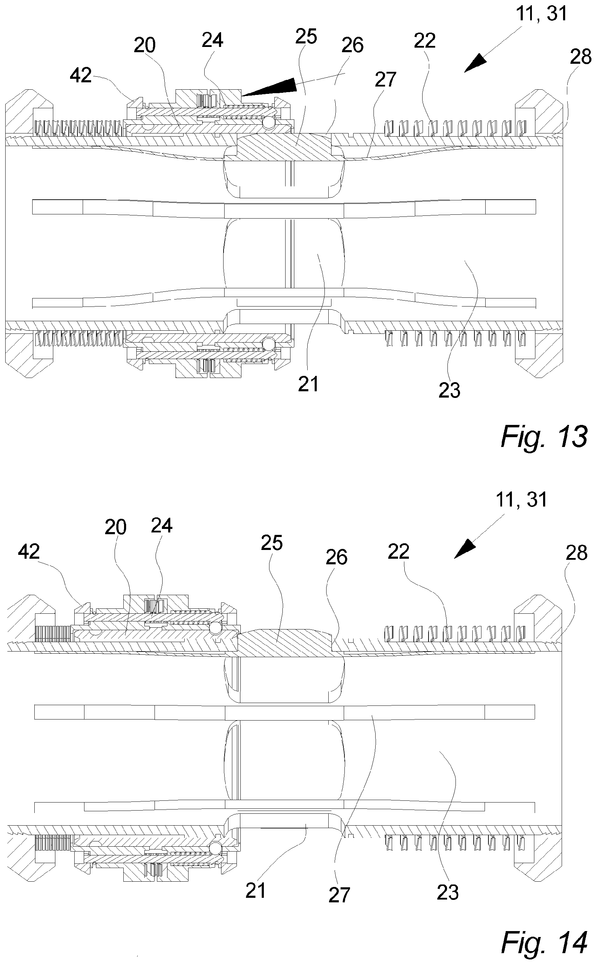

Fig. 13 illustrates a cross section through the middle of a valve 11 approaching an open state, as seen from the side. The tap apertures 21 are at this time half uncovered and pressurised liquid or gas will start to be pressed out of the tap apertures 21.

Fig. 14 illustrates a cross section through the middle of a valve 11 locked in an open state, as seen from the side.

In this embodiment of the invention the valve 11 also comprises locking means 24 ensuring than when the tap-aperture cover 20 is pushed almost to an open state of the valve 11 as shown in fig. 14 the lock spring means 27 will push position fixation means 25 out through position fixation means apertures 26 in the valve housing 23 to prevent the compressed spring means 22 from pushing the tap-aperture cover 20 back to a closed state of the valve 11. Hereby the valve 11 is provided with a self-retaining function ensuring that the valve 11 remains in the open state until the locking means 24 are actively released.

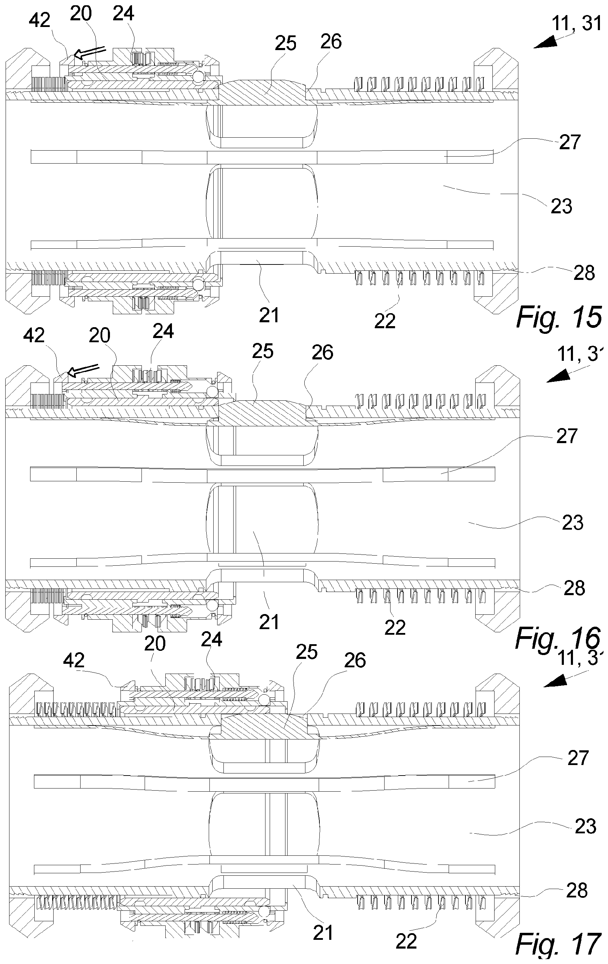

Fig. 15 illustrates a cross section through the middle of a valve 11 in an open state while the locking means 24 is being released, as seen from the side and fig. 16 illustrates a cross section through the middle of a valve 11 in an open state after the locking means 24 has been released, as seen from the side.

In this embodiment of the invention a release ring 42 of the locking means 11 is temporarily pushed backwards as indicated by the arrow whereby an upper part of the locking means is pushed forward by a spring arranged on the outside of the tap-aperture cover 20 so that this upper part pushes the position fixation means 25 a bit down through the position fixation means apertures 26 and so that the tap-aperture cover 20 may move towards the tap-apertures 21 and at the same time press the position fixation means 25 the rest of the way down.

Fig. 17 illustrates a cross section through the middle of a valve 11 approaching a closed state, as seen from the side. As disclosed the tap-aperture cover 20 is now retaining the position fixation means 25 in the position fixation means apertures 26 so that the spring means 22 may push the tap-aperture cover 20 all the way to the middle position of the valve 11 to close the tap-apertures 21.

The tap-aperture cover 20 will now again remain in a closed state until it is mechanically pushed to either sides.

Fig. 18 illustrates a fluid distribution system 30 comprising a flexible hose 18 with a valve 11 approaching a flow blocking device 16, as seen from the side.

The flexible hose 18 of the fluid distribution system 30 illustrated in figs. 18-22 could in a preferred embodiment of the invention be the same as the previously described liquid conduit 2 or fluid conduit 19 and the flow blocking device 16 and the valve control means 12 illustrated in figs. 18-22 could in a preferred embodiment of the invention be arranged on the previously described distributing means 5 e.g. inside the tap housing 10.

If the fluid or liquid conduit 2, 19 was pressurised from both ends with different fluids e.g. if slurry was provided from one end of the fluid or liquid conduit 2, 19 and water was provided from the other end of the fluid or liquid conduit 2, 19, the slurry could e.g. be sprayed out on relatively large crops where after water could be sprayed on the same crops to wash the slurry down to the soil - e.g. to relieve smell problems and enhance sorption of nutrients - all in one go and continuously as the distributing means 5 moves across the field 3. In such a case a flow blocking device 16 could also be provided at the middle of the tap housing 10 to separate the two fluids in the fluid or liquid conduit 2, 19 to form a dual tap housing 10.

In another embodiment this double fluid technique could be used to irrigate and distribute pesticides or other at the same time or if the fluid distribution system 30 was used in a different configuration (i.e. other than for agricultural use) the two different fluids could be any combination of known fluids such as soap-water, paint, liquid food products, CO2 or other.

In this embodiment of the invention both ends of the valve 11 is provided with hose connection means 28 for connecting a hose part 29 to either ends of the valve 11. However, in another embodiment of the invention the hose 18 could be throughgoing.

Fig. 19 illustrates a valve 11 passing a first flow blocker 32, as seen from the side.

As the valve 11 passes the first flow blocker 32, the second flow blocker 33 will remain in a compressing state so that the pressurised content in the hose 2, 18, 19 will in principle never pass the second flow blocker 33 if not desired.

In this embodiment of the invention both the first flow blocker 32 and the second flow blocker 33 are formed as two wheels 35 compressing the conduit 2, 19 from opposite sides. In this case the outer diameter 36 of the wheels 35 is bigger than the outer diameter 37 of the conduit 2, 19 to ensure that the wheels 35 inherently will be guided out and over a rigid incompressible portion of the conduits 2, 18, 19 such as a valve 11. In another embodiment the flow blockers 32, 33 would compress the hose 2, 18, 19 from only one side against a fixed fence and in such a case the wheels 35 would have an outer diameter 36 that is more than twice as big as the outer diameter 37 of the conduit 2, 18, 19.

In this embodiment of the invention the first flow blocker 32 and the second flow blocker 33 each comprises guide means 39 (not shown) for guiding the radial movement (radial in relation to the hose 2, 18, 19) of the flow blockers 32, 33 and they comprises blocking spring means 38 (not shown) to ensure that the flow blockers 32, 33 remains in a compressing state i.e. the blocking spring means 38 forces the flow blockers 32, 33 against each other as long as the flow blockers 32, 33 are not actively pushed outwards e.g. by a valve 11 passing.

In an embodiment of the invention the first flow blocker 32 and/or the second flow blocker 33 would also comprise position displacement means 40 (not shown) e.g. in the form of an electrical linear actuator, a pneumatic cylinder or an hydraulic cylinder for selectively opening of closing the flow blockers 32, 33 in accordance with a control signal to the position displacement means 40. In an embodiment first flow blocker 32 and/or the second flow blocker 33 could also be at least partly manually operated.

Fig. 20 illustrates a valve 11 passing valve control means 12, as seen from the side.

As soon as the valve 11 has passed the first flow blocker 32, the flexible hose 18 is compressed again by the wheels 35 and the valve continues through the valve control means 12 in which the release ring 42 is engaged by the valve control means 12 so that the valve 11 changes from an open state to an closed state.

To ensure that the conduit 2, 18, 19 is emptied as efficiently as possible the flow blocking device 16 and the valve control means 12 is tilted in an upwards angle as shown in figs 18-21 to allow the valve 11 to drain after the pressure has been relieved - when it has passed the first flow blocker 32 - and until the valve is closed by the valve control means 12.

Fig. 21 illustrates a valve 11 passing a second flow blocker 33, as seen from the side.

The valve 11 will now pass through the second flow blocker 33 while the first flow blocker 32 remain engaged and as soon as the valve 11 has passed the second flow blocker 33 the second flow blocker 33 will again compress the hose 2, 18, 19.

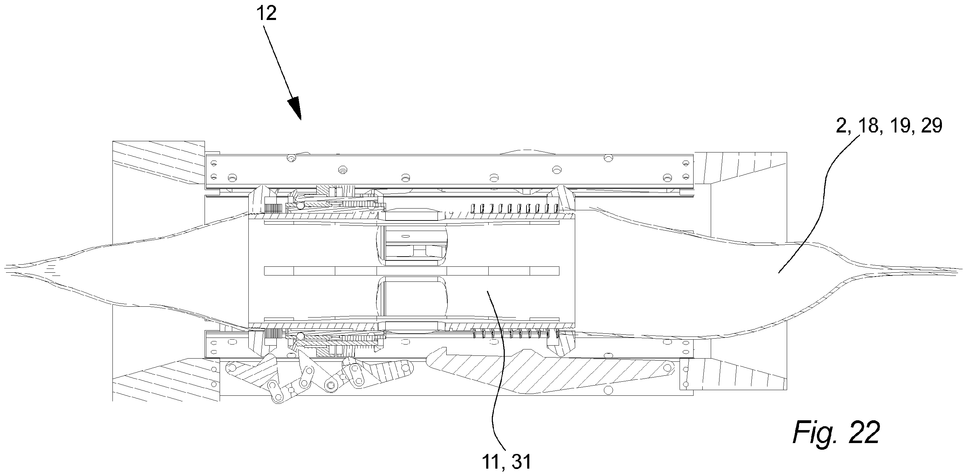

Fig. 22 illustrates cross section of a valve 11 engaging valve control means 12, as seen from the side.

The valve 11 and particularly the valve control means 12 can obviously be designed in many ways but since the valve 11 is cylindrical it is also advantageous to form the valve control means 12 with a cylindrical housing through which the valve 11 can pass while being switched. In this embodiment the valve control means 12 comprises a number of levers and arm that temporarily engages the desired parts of the valve 11 as it passes through the valve control means 12.

In an embodiment of the invention the distributing means 5 - or another device tapping fluid from the conduits 2, 29 - would most likely comprise two valve control means 12 e.g. arranged at either ends of the tap housing 10 so that the valve 11 can be opened by the valve control means 12 as soon as it enters the tap housing 10 and the closed again before it leaves the tap housing 10.

If the fluid or liquid conduit 2, 19 always passes the same way through the tap housing 10 the flow blocking device 16 would only have to be arranged around the valve control means 12 at the end where the valve 11 leaves the tap housing 10, but in most cases it would be preferable if the conduits 2, 19 could travel in both axial directions through the tap housing 10 and then a flow blocking device 16 would have to be arranged at both valve control means 12. Or in an embodiment two valve control means 12 could be arranged between the first flow blocker 32 and the second flow blocker 33 of the same flow blocking device 16.

The invention has been exemplified above with reference to specific examples of liquid distributing system 1, valves 11, valve control means 12, flow blocking devices 16 and other. However, it should be understood that the invention is not limited to the particular examples described above but may be designed and altered in a multitude of varieties within the scope of the invention as specified in the claims.

### List

1. Liquid distributing system
2. Liquid conduit
3. Field
4. Pressurising means
5. Distributing means
6. Drive means
7. Tap means
8. Delivery means
9. Conduit displacing means
10. Tap housing
11. Valve
12. Valve control means
13. Distributing pump
14. Drag hose
15. Liquid conduit trolley
16. Flow blocking device
17. Liquid guide
18. Flexible hose
19. Fluid conduit
20. Tap-aperture covers
21. Tap-apertures
22. Spring means
23. Valve housing
24. Locking means
25. Position fixation means
26. Position fixation means aperture
27. Lock spring means
28. Hose connection means
29. Hose parts
30. Fluid distribution system
31. Rigid incompressible portion
32. First flow blocker
33. Second flow blocker
34. Blocking means
35. Wheel
36. Outer diameter of wheel
37. Outer diameter of hose
38. Blocking spring means
39. Guide means
40. Position displacement means
41. Supply hose
42. Release ring
43. Supply hose coil
44. Liquid conduit coil
45. Spare coil
46. Conduit pickup means
47. Conduit replacing means
48. Guide wheel

## Claims

1. A liquid distributing system (1) for distributing liquids such as water or slurry on a field (3), said system (1) comprising,
a liquid conduit (2) for being placed in a longitudinal direction on said field (3),
pressurising means (4) for pressurising a liquid in said liquid conduit (2),
distributing means (5) comprising drive means (6) for moving said distributing means (5) in said longitudinal direction, wherein said distributing means (5) comprises tap means (7) for tapping liquid from said liquid conduit (2) and delivery means (8) for distributing said liquid to said field (3),
said distributing means (5) further comprises conduit displacing means (9) for displacing said liquid conduit (2) in a direction transverse to said longitudinal direction on said field (3).
**characterised in that**
said liquid conduit (2) comprises valves (11) and wherein said tap means (7) comprises valve control means (12) for controlling said valves (11).

2. A liquid distributing system (1) according to claim 1, wherein said conduit displacing means (9) comprises means for displacing said liquid conduit (2) in accordance with said motion of said distributing means (5) in said longitudinal direction.

3. A liquid distributing system (1) according to claim 1 or 2, wherein said tap means (7) comprises a tap housing (10) substantially surrounding said tap means (7), wherein said tap housing (10) comprises a liquid guide (17) for leading said liquid to said delivery means (8).

4. A liquid distributing system (1) according to any of the preceding claims, wherein said delivery means (8) comprises a distributing pump (13) mounted on said distributing means (5).

5. A liquid distributing system (1) according to any of the preceding claims, wherein said delivery means (8) comprises a plurality of drag hoses (14) for delivering said liquid at or on the soil.

6. A liquid distributing system (1) according to any of the preceding claims, wherein said liquid distributing system (1) further comprises a liquid conduit trolley (15) for managing said liquid conduit (2) and wherein said liquid conduit trolley (15) is coupled to one end of said liquid conduit (2).

7. A liquid distributing system (1) according to any of the preceding claims, wherein said tap means (7) comprises a flow blocking device (16) for substantially emptying said liquid conduit (2) as it passes said tap means (7).

8. A liquid distributing system (1) according to any of the preceding claims, wherein said conduit displacing means (9) comprises conduit pickup means (46) including means for picking said liquid conduit (2) up of said field (3) and leading it to said tap means (7).

9. A liquid distributing system (1) according to any of the preceding claims, wherein said conduit displacing means (9) comprises conduit replacing means (47) including means for leading said liquid conduit (2) from said tap means (7) and back down onto said field (3).

10. A liquid distributing system (1) according to claims 8 and 9, wherein said conduit pickup means (46) is arranged separate from said conduit replacing means (47).

11. A liquid distributing system (1) according to claims 8 and 9, wherein said conduit pickup means (46) and said conduit replacing means (47) are arranged on opposite sides of said tap means (7).

12. A method for distributing liquid on a field (3) by means of a liquid distributing system (1) according to any of the preceding claims, said method comprising the steps of:
• placing a liquid conduit (2) comprising valves (11) on said field (3),
• pressurising a liquid in said liquid conduit (2),
• moving distributing means (5) along said liquid conduit (2) while at least periodically tapping said liquid from said liquid conduit (2) by controlling said valves (11) by means of valve control means (12) of said distributing means (5) and distributing it to said field (3),
• displacing said liquid conduit (2) on said field (3) in a direction transverse to said liquid conduit (2) by means of conduit displacing means (9) of said distributing means (5).

13. A method according to claim 12, wherein said liquid conduit (2) is picked up from said field (3), tapped and replaced on said field (3) in a continuous sequential process.

14. Use of a liquid distributing system (1) according to any of claims 1-11 for distributing slurry to a field (3).

## Patentansprüche

1. Flüssigkeitverteilungssystem (1) zum Verteilen von Flüssigkeiten wie Wasser oder Gülle auf einem Feld (3), wobei das System (1) umfasst:
eine Flüssigkeitsleitung (2), die dazu vorgesehen ist, in einer Längsrichtung auf dem Feld (3) platziert zu werden,
Druckmittel (4) zum Druckbeaufschlagen einer Flüssigkeit in der Flüssigkeitsleitung (2), Verteilungsmittel (5), umfassend Antriebsmittel (6) zum Bewegen der Verteilungsmittel (5) in der Längsrichtung, wobei die Verteilungsmittel (5) Abzapfmittel (7) zum Abzapfen von Flüssigkeit aus der Flüssigkeitsleitung (2) und Liefermittel (8) zum Verteilen der Flüssigkeit zu dem Feld (3) umfassen,
wobei die Verteilungsmittel (5) ferner Leitungsverlagerungsmittel (9) zum Verlagern der Flüssigkeitsleitung (2) in einer Richtung quer zur Längsrichtung auf dem Feld (3) umfassen,
**dadurch gekennzeichnet, dass**
die Flüssigkeitsleitung (2) Ventile (11) umfasst, und wobei die Abzapfmittel (7) Ventilsteuerungsmittel (12) zum Steuern der Ventile (11) umfassen.

2. Flüssigkeitsverteilungssystem (1) nach Anspruch 1, wobei die Leitungsverlagerungsmittel (9) Mittel zum Verlagern der Flüssigkeitsleitung (2) entsprechend der Bewegung der Verteilungsmittel (5) in der Längsrichtung umfassen.

3. Flüssigkeitsverteilungssystem (1) nach Anspruch 1 oder 2, wobei die Abzapfmittel (7) ein Abzapfgehäuse (10) umfassen, das die Abzapfmittel (7) im Wesentlichen umgibt, wobei das Abzapfgehäuse (10) eine Flüssigkeitsführung (17) zum Führen der Flüssigkeit zu den Liefermitteln (8) umfasst.

4. Flüssigkeitsverteilungssystem (1) nach einem der vorangehenden Ansprüche, wobei die Liefermittel (8) eine Verteilungspumpe (13) umfassen, die an den Verteilungsmitteln (5) montiert ist.

5. Flüssigkeitsverteilungssystem (1) nach einem der vorangehenden Ansprüche, wobei die Liefermittel (8) eine Vielzahl von Schleppschläuchen (14) zum Liefern der Flüssigkeit an oder auf dem Boden umfasst.

6. Flüssigkeitsverteilungssystem (1) nach einem der vorangehenden Ansprüche, wobei das Flüssigkeitsverteilungssystem (1) ferner einen Flüssigkeitsleitungswagen (15) zum Handhaben der Flüssigkeitsleitung (2) umfasst und wobei der Flüssigkeitsleitungswagen (15) mit einem Ende der Flüssigkeitsleitung (2) gekoppelt ist.

7. Flüssigkeitsverteilungssystem (1) nach einem der vorangehenden Ansprüche, wobei die Abzapfmittel (7) eine Strömungssperrvorrichtung (16) umfasst, um die Flüssigkeitsleitung (2) im Wesentlichen zu leeren, während sie die Abzapfmittel (7) passiert.

8. Flüssigkeitsverteilungssystem (1) nach einem der vorangehenden Ansprüche, wobei die Leitungsverlagerungsmittel (9) Leitungsaufnahmemittel (46) enthalten, die Mittel zum Aufnehmen der Flüssigkeitsleitung (2) vom Feld (3) und zum Führen der Leitung zu den Abzapfmitteln (7) enthalten.

9. Flüssigkeitsverteilungssystem (1) nach einem der vorangehenden Ansprüche, wobei die Leitungsverlagerungsmittel (9) Leitungsrücksetzmittel (47) enthalten, die Mittel zum Führen der Flüssigkeitsleitung (2) von den Abzapfmitteln (7) und Zurücksetzen auf das Feld (3) enthalten.

10. Flüssigkeitsverteilungssystem (1) nach Ansprüchen 8 und 9, wobei die Leitungsaufnahmemittel (46) separat von den Leitungsrücksetzmitteln (47) angeordnet sind.

11. Flüssigkeitsverteilungssystem (1) nach Ansprüchen 8 und 9, wobei die Leitungsaufnahmemittel (46) und die Leitungsrücksetzmittel (47) auf gegenüberliegenden Seiten der Abzapfmittel (7) angeordnet sind.

12. Verfahren zum Verteilen von Flüssigkeit auf einem Feld (3) mittels eines Flüssigkeitsverteilungssystems (1) nach einem der vorangehenden Ansprüche, wobei das Verfahren die folgenden Schritte umfasst:
• ein Platzieren einer Flüssigkeitsleitung (2), umfassend Ventile (11) auf dem Feld (3);
• ein Druckbeaufschlagen einer Flüssigkeit in der Flüssigkeitsleitung (2);
• ein Bewegen von Verteilungsmitteln (5) entlang der Flüssigkeitsleitung (2), während mindestens periodisch Flüssigkeit aus der Flüssigkeitsleitung (2) abgezapft wird, indem die Ventile (11) mittels Ventilsteuermitteln (12) der Verteilungsmittel (5) gesteuert werden, und Verteilen der Flüssigkeit an das Feld (3);
• ein Verlagern der Flüssigkeitsleitung (2) auf dem Feld (3) in eine Richtung quer zur Flüssigkeitsleitung (2) mittels Leitungsverlagerungsmitteln (9) der Verteilungsmittel (5).

13. Verfahren nach Anspruch 12, wobei die Flüssigkeitsleitung (2) in einem kontinuierlichen sequentiellen Prozess vom Feld (3) aufgenommen, abgezapft und auf das Feld (3) zurückgesetzt wird.

14. Verwendung eines Flüssigkeitsverteilungssystems (1) nach einem der Ansprüche 1 bis 11 zum Verteilen von Gülle auf einem Feld (3).

## Revendications

1. Système de distribution de liquide (1) destiné à distribuer des liquides tels que de l'eau ou une suspension épaisse sur un champ (3), ledit système (1) comprenant,
une conduite de liquide (2) destinée à être placée selon une direction longitudinale sur ledit champ (3),
un moyen de mise sous pression (4) destiné à mettre sous pression un liquide dans ladite conduite de liquide (2),
un moyen de distribution (5) comprenant un moyen d'entraînement (6) destiné à déplacer ledit moyen de distribution (5) selon ladite direction longitudinale, ledit moyen de distribution (5) comprenant un moyen de robinet (7) destiné à évacuer le liquide de ladite conduite de liquide (2) et un moyen de distribution (8) destiné à distribuer ledit liquide dans ledit champ (3),
ledit moyen de distribution (5) comprenant en outre un moyen de déplacement de conduite (9) destiné à déplacer ladite conduite de liquide (2) selon une direction transversale à ladite direction longitudinale sur ledit champ (3)
**caractérisé en ce que**
ladite conduite de liquide (2) comprend des soupapes (11) et ledit moyen de robinet (7) comprenant un moyen de commande de soupapes (12) destiné à commander lesdites soupapes (11).

2. Système de distribution de liquide (1) selon la revendication 1, ledit moyen de déplacement de conduite (9) comprenant un moyen destiné à déplacer ladite conduit de liquide (2) selon ledit mouvement dudit moyen de distribution (5) dans ladite direction longitudinale.

3. Système de distribution de liquide (1) selon la revendication 1 ou 2, ledit moyen de robinet (7) comprenant un boîtier de robinet (10) entourant sensiblement ledit moyen de robinet (7), ledit boîtier de robinet (10) comprenant un guide de liquide (17) destiné à acheminer ledit liquide audit moyen de distribution (8).

4. Système de distribution de liquide (1) selon l'une quelconque des revendications précédentes, ledit moyen de distribution (8) comprenant une pompe de distribution (13) montée sur ledit moyen de distribution (5).

5. Système de distribution de liquide (1) selon l'une quelconque des revendications précédentes, ledit moyen de distribution (8) comprenant une pluralité de tuyaux d'épandage (14) destinés à distribuer ledit liquide au niveau du sol ou sur celui-ci.

6. Système de distribution de liquide (1) selon l'une quelconque des revendications précédentes, ledit système de distribution de liquide (1) comprenant en outre un chariot de conduite de liquide (15) pour gérer ladite conduite de liquide (2) et ledit chariot de conduite de liquide (15) étant couplé à une extrémité de ladite conduite de liquide (2).

7. Système de distribution de liquide (1) selon l'une quelconque des revendications précédentes, ledit moyen de robinet (7) comprenant un dispositif de blocage d'écoulement (16) pour vider sensiblement ladite conduite de liquide (2) tandis qu'il passe ledit moyen de robinet (7).

8. Système de distribution de liquide (1) selon l'une quelconque des revendications précédentes, ledit moyen de déplacement de conduite (9) comprenant un moyen de ramassage de conduite (46) comprenant un moyen pour ramasser ladite conduite de liquide (2) dudit champ (3) et l'acheminer audit moyen de robinet (7).

9. Système de distribution de liquide (1) selon l'une quelconque des revendications précédentes, ledit moyen de déplacement de conduite (9) comprenant un moyen de remplacement de conduite (47) comprenant un moyen pour acheminer ladite conduite de liquide (2) à partir dudit moyen de robinet (7) et jusque dans ledit champ (3).

10. Système de distribution de liquide (1) selon les revendications 8 et 9, ledit moyen de ramassage de conduite (46) étant agencé de manière à être séparé desdits moyens de remplacement de conduite (47).

11. Système de distribution de liquide (1) selon les revendications 8 et 9, ledit moyen de ramassage de conduite (46) et ledit moyen de remplacement de conduite (47) étant agencés sur des côtés opposés dudit moyen de robinet (7).

12. Procédé permettant la distribution de liquide sur un champ (3) au moyen d'un système de distribution de liquide (1) selon l'une quelconque des revendications précédentes, ledit procédé comprenant les étapes de :
• mise en place d'une conduite de liquide (2) comprenant des soupapes (11) sur ledit champ (3),
• mise sous pression d'un liquide dans ladite conduite de liquide (2),
• déplacement du moyen de distribution (5) le long dudit conduit de liquide (2) tout en évacuant au moins périodiquement ledit liquide de ladite conduite de liquide (2) en commandant auxdites soupapes (11) à l'aide du moyen de commande de soupapes (12) dudit moyen de distribution (5) et en le distribuant audit champ (3),
• déplacement dudit conduit de liquide (2) sur ledit champ (3) selon une direction transversale à ladite conduite de liquide (2) à l'aide du moyen de déplacement de conduite (9) dudit moyen de distribution (5).

13. Procédé selon la revendication 12, ladite conduite de liquide (2) étant ramassée dudit champ (3), évacuée et remplacée sur ledit champ (3) dans un processus séquentiel continu.

14. Utilisation d'un système de distribution de liquide (1) selon l'une quelconque des revendications 1 à 11 en vue de la distribution de suspension épaisse dans un champ (3).
